(19) 

(11) **EP 4 207 359 B1**

(12) # EUROPEAN PATENT SPECIFICATION

(45) Date of publication and mention of the grant of the patent:
**23.09.2026 Bulletin 2026/39**

(21) Application number: **22736889.1**

(22) Date of filing: **07.01.2022**

(51) International Patent Classification (IPC):
***H01M 4/131*** (2010.01) ***H01M 4/1391*** (2010.01)
***H01M 4/525*** (2010.01) ***H01M 4/04*** (2006.01)
***H01M 4/505*** (2010.01) ***H01M 10/052*** (2010.01)

(52) Cooperative Patent Classification (CPC):
**H01M 4/505; H01M 4/04; H01M 4/0404; H01M 4/131; H01M 4/1391; H01M 4/366; H01M 4/525;** H01M 10/052; H01M 10/0525; H01M 2004/021; H01M 2004/028; Y02E 60/10

(86) International application number:
**PCT/KR2022/000312**

(87) International publication number:
**WO 2022/149912 (14.07.2022 Gazette 2022/28)**

(54) **POSITIVE ELECTRODE AND LITHIUM SECONDARY BATTERY INCLUDING THE SAME**

POSITIVELEKTRODE UND LITHIUMSEKUNDÄRBATTERIE DAMIT

ÉLECTRODE POSITIVE ET BATTERIE SECONDAIRE AU LITHIUM LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.01.2021 KR 20210002853**

(43) Date of publication of application:
**05.07.2023 Bulletin 2023/27**

(73) Proprietor: **LG Energy Solution, Ltd.**
**Seoul 07335 (KR)**

(72) Inventors:
- **AN, Ji-Su**
  **Daejeon 34122 (KR)**
- **SUNG, Ki-Won**
  **Daejeon 34122 (KR)**
- **LEE, Eun-Ju**
  **Daejeon 34122 (KR)**

(74) Representative: **Plasseraud IP**
**104 Rue de Richelieu**
**CS92104**
**75080 Paris Cedex 02 (FR)**

(56) References cited:
**WO-A1-2020/242138**
**CN-A- 111 434 618**
**CN-A- 112 072 068**
**CN-B- 110 429 252**
**JP-A- 2019 029 205**
**KR-A- 20130 050 473**
**KR-A- 20130 050 473**
**KR-A- 20200 034 382**
**KR-A- 20200 142 340**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 207 359 B1

## Description

### TECHNICAL FIELD

The present disclosure relates to a positive electrode and a lithium secondary battery including the same. Particularly, the present disclosure relates to a positive electrode showing high initial efficiency and excellent quick charging performance, and a lithium secondary battery including the same.

The present application claims priority to Korean Patent Application No. 10-2021-0002853 filed on January 8, 2021 in the Republic of Korea.

### BACKGROUND ART

As technical development and needs for mobile instruments have been increased, rechargeable secondary batteries that can be downsized and provided with high capacity have been increasingly in demand. In addition, among such secondary batteries, lithium secondary batteries having high energy density and operating voltage have been commercialized and used widely.

A lithium secondary battery has a structure including an electrode assembly having a positive electrode and a negative electrode, each of which includes an active material coated on an electrode current collector, and a porous separator interposed between both electrodes; and a lithium salt-containing electrolyte injected to the electrode assembly. The electrode is obtained by applying a slurry including an active material, a binder and a conductive material dispersed in a solvent to a current collector, followed by drying and pressing.

A lithium secondary battery is a secondary battery in which lithium ions participate in electric conduction between electrodes during charge/discharge, and shows higher energy density and a lower memory effect, as compared to the other secondary batteries, such as a nickel metal hydride battery or a nickel cadmium battery. Therefore, the use of such a lithium secondary battery has been extended from a compact power source for portable electronic devices, household electric instruments, or the like, to medium- or large-scale power sources for devices, such as electric power storage devices, UPS devices, electric power leveling devices, etc., or power sources for driving ships, railroad cars, hybrid vehicles, electric vehicles, etc., and there is a need for improvement of the performance of such a battery. For example, in the use for cars, such as hybrid vehicles or electric vehicles, there is a need for providing a secondary battery with high energy density in order to realize a long range of driving or with high output in order to improve acceleration response.

To realize a secondary battery for electric vehicles with high output and high energy density, a positive electrode having a high nickel (Ni) content has been used to obtain an electrode.

However, when using such a Ni-enriched positive electrode, the electrode affects a change in resistance depending on the state-of-charge (SOC) of a battery, as compared to a positive electrode having a low Ni content, and most secondary batteries show an increase in resistance. To solve the above-mentioned problem, there is still a need for studies of controlling the resistance of an electrode or cell through the structure of a positive electrode or the design of the composition of a positive electrode.

CN 110 429 252 B and WO 2020/242138 A1 disclose multi-layer electrodes.

### DISCLOSURE

#### Technical Problem

The present disclosure is designed to solve the problems of the related art, and therefore the present disclosure is directed to providing a positive electrode which prevents an increase in resistance at a low SOC during discharge, and a secondary battery including the same.

#### Technical Solution

The invention is as defined in the independent claims.

The invention provides a positive electrode including:

a positive electrode current collector; and

a positive electrode active material layer disposed on at least one surface of the positive electrode current collector, and having a lower layer region facing the positive electrode current collector and containing a first positive electrode active material and a first binder polymer, and an upper layer region facing the lower layer region and containing a second positive electrode active material and a second binder polymer,

wherein the first positive electrode active material in the lower layer region is represented by the following Chemical

Formula 1, the second positive electrode active material in the upper layer region is represented by the following Chemical Formula 2, and the Ni content of the second positive electrode active material is larger than the Ni content of the first positive electrode active material:

[Chemical Formula 1] $Li_{1+a}[Ni_xMn_yCo_z]M1_tO_2$

wherein $0 \leq a \leq 0.2$, $0.4 \leq x \leq 0.9$, $0 < y < 1$, $0 < z < 1$, $0 \leq t < 0.1$ and $x + y + z + t = 1$, and M1 is at least one element selected from the group consisting of Co, Mn, Ni, Al, Fe, V, Cr, Ti, Ta, Mg, Mo, Zr, W, Sn, Hf, Nd and Gd,

[Chemical Formula 2] $Li_{1+b}[Ni_uMn_vCo_w]M2_sO_2$

wherein $0 \leq b \leq 0.2$, $0.4 \leq u \leq 0.9$, $0 < v < 1$, $0 < w < 1$, $0 \leq s < 0.1$ and $u + v + w + s = 1$, and M2 is at least one element selected from the group consisting of Co, Mn, Ni, Al, Fe, V, Cr, Ti, Ta, Mg, Mo, Zr, W, Sn, Hf, Nd and Gd.

The Ni content of the first positive electrode active material is 50-75 mol% based on the total transition metals of the first positive electrode active material, and the Ni content of the second positive electrode active material is 81-90 mol% based on the total transition metals of the second positive electrode active material.

The Ni content of the first positive electrode active material may be 65-70 mol% based on the total transition metals of the first positive electrode active material, and the Ni content of the second positive electrode active material may be 86-90 mol% based on the total transition metals of the second positive electrode active material.

The weight ratio of the lower layer region of the positive electrode active material layer to the upper layer region thereof may be 20:80-80:20.

The invention further provides a method for manufacturing a positive electrode, including the steps of:

preparing a slurry for a lower layer containing a first positive electrode active material represented by the following Chemical Formula 1, a first binder polymer and a first dispersion medium and a slurry for an upper layer containing a second positive electrode active material represented by the following Chemical Formula 2, a second binder polymer and a second dispersion medium, wherein the Ni content of the second positive electrode active material is larger than the Ni content of the first positive electrode active material;

coating the slurry for a lower layer on one surface of a positive electrode current collector, and coating the slurry for an upper layer on the slurry for a lower layer; and

drying the coated slurry for a lower layer and slurry for an upper layer at the same time to form a positive electrode active material layer:

[Chemical Formula 1] $Li_{1+a}[Ni_xMn_yCo_z]M1_tO_2$

wherein $0 \leq a \leq 0.2$, $0.4 \leq x \leq 0.9$, $0 < y < 1$, $0 < z < 1$, $0 \leq t < 0.1$ and $x + y + z + t = 1$, and M1 is at least one element selected from the group consisting of Co, Mn, Ni, Al, Fe, V, Cr, Ti, Ta, Mg, Mo, Zr, W, Sn, Hf, Nd and Gd,

[Chemical Formula 2] $Li_{1+b}[Ni_uMn_vCo_w]M2_sO_2$

wherein $0 \leq b \leq 0.2$, $0.4 \leq u \leq 0.9$, $0 < v < 1$, $0 < w < 1$, $0 \leq s < 0.1$ and $u + v + w + s = 1$, and M2 is at least one element selected from the group consisting of Co, Mn, Ni, Al, Fe, V, Cr, Ti, Ta, Mg, Mo, Zr, W, Sn, Hf, Nd and Gd.

The Ni content of the first positive electrode active material is 50-75 mol% based on the total transition metals of the first positive electrode active material, and the Ni content of the second positive electrode active material is 81-90 mol% based on the total transition metals of the second positive electrode active material.

The Ni content of the first positive electrode active material may be 65-70 mol% based on the total transition metals of the first positive electrode active material, and the Ni content of the second positive electrode active material may be 86-90 mol% based on the total transition metals of the second positive electrode active material.

Further, there is provided a lithium secondary battery including the positive electrode according to the invention.

Advantageous Effects

The positive electrode according to an embodiment of the present disclosure includes a positive electrode active material layer, which has a lower layer region facing the positive electrode current collector and containing a first positive electrode active material and a first binder polymer, and an upper layer region disposed on the lower layer region, wherein the Ni content of the second positive electrode active material in the upper layer region is controlled to be larger than the Ni

content of the first positive electrode active material in the lower layer region. In this manner, it is possible to prevent an increase in resistance which may cause rapid degradation of output at a low SOC, and to provide a positive electrode and a secondary battery including the same with improved high-temperature cycle characteristics.

In addition, according to an embodiment of the present disclosure, the above-effects may be realized more predominantly in a high-loading positive electrode having a high coating amount of positive electrode active material. As a result, it is possible to realize a battery for electric vehicles (EV) having high capacity and high energy density.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

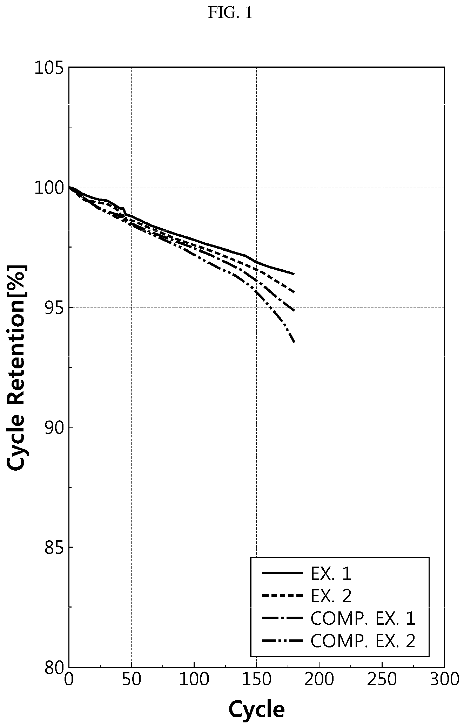

FIG. 1 is a graph illustrating the high-temperature capacity retention of the secondary battery according to each of Examples 1 and 2 and Comparative Examples 1 and 2, depending on cycle number.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

There is provided a positive electrode including:

a positive electrode current collector; and

a positive electrode active material layer disposed on at least one surface of the positive electrode current collector, and having a lower layer region facing the positive electrode current collector and containing a first positive electrode active material and a first binder polymer, and an upper layer region facing the lower layer region and containing a second positive electrode active material and a second binder polymer,

wherein the first positive electrode active material in the lower layer region is represented by the following Chemical Formula 1, the second positive electrode active material in the upper layer region is represented by the following Chemical Formula 2, and the Ni content of the second positive electrode active material is larger than the Ni content of the first positive electrode active material:

[Chemical Formula 1] $Li_{1+a}[Ni_xMn_yCo_z]M1_tO_2$

wherein $0 \leq a \leq 0.2$, $0.4 \leq x \leq 0.9$, $0 < y < 1$, $0 < z < 1$, $0 \leq t < 0.1$ and $x + y + z + t = 1$, and M1 is at least one element selected from the group consisting of Co, Mn, Ni, Al, Fe, V, Cr, Ti, Ta, Mg, Mo, Zr, W, Sn, Hf, Nd and Gd,

[Chemical Formula 2] $Li_{1+b}[Ni_uMn_vCo_w]M2_sO_2$

wherein $0 \leq b \leq 0.2$, $0.4 \leq u \leq 0.9$, $0 < v < 1$, $0 < w < 1$, $0 \leq s < 0.1$ and $u + v + w + s = 1$, and M2 is at least one element selected from the group consisting of Co, Mn, Ni, Al, Fe, V, Cr, Ti, Ta, Mg, Mo, Zr, W, Sn, Hf, Nd and Gd.

The present disclosure suggests a method for manufacturing a positive electrode by disposing two different types of positive electrode active materials having a different Ni content in the upper layer and lower layer of the positive electrode through a double layer (DLD) coating technology for a positive electrode, wherein the Ni content of the positive electrode active material in the upper layer is controlled to be larger than the Ni content of the positive electrode active material in the lower layer. The present disclosure is directed to controlling the resistance in a lower SOC region that may affect the output of a secondary battery by using the positive electrode.

In addition, the present disclosure shows a higher effect in a high-loading electrode having a high coating amount of positive electrode active material, and may be applied to the manufacture of a battery for electric vehicles (EV) having high capacity and high energy density. In general, a high-Ni positive electrode active material, i.e. a positive electrode active material having a high Ni content, refers to a positive electrode active material containing Ni at 80 mol% or more based on the total transition metals.

Such a high-Ni positive electrode active material undergoes a larger change in structure during charge/discharge and shows low structural stability, and thus is problematic in that it causes a rapid increase in resistance in a lower SOC region, resulting in degradation of output.

According to the present disclosure, a positive electrode active material having a low Ni content is disposed in the lower layer region of the bilayer-type positive electrode active material layer to increase the structural stability, thereby improving the problem of an increase in resistance.

The first positive electrode active material has have a Ni content of 50-75 mol%, in particular of 55-75 mol%, 60-75 mol%, 65-75 mol%, or 65-70 mol%, based on the total transition metals of the first positive electrode active material.

In addition, the second positive electrode active material has have a Ni content of 81-90 mol%, in particular of 82-90 mol%, 84-90 mol%, or 86-90 mol%, based on the total transition metals of the second positive electrode active material.

Each of the first positive electrode active material and the second positive electrode active material may be primary particles, or secondary particles formed by agglomeration of primary particles through a granulation process.

In the particle size distribution, the first positive electrode active material may have an average particle diameter (D50) of 3-15 μm, particularly 5-12 μm, and more particularly 6-10 μm.

In addition, the second positive electrode active material may have a D50 of 5-20 μm, particularly 7-18 μm, and more particularly 10-15 μm.

As used herein, 'particle diameter, Dn' means a particle diameter corresponding to n% of the accumulated particle number distribution depending on particle diameter. Therefore, 'D50' means a particle diameter corresponding to 50% of the accumulated particle number distribution depending on particle diameter, 'D90' means a particle diameter corresponding to 90% of the accumulated particle number distribution depending on particle diameter, and 'D10' means a particle diameter corresponding to 10% of the accumulated particle number distribution depending on particle diameter.

In addition, Dn may be determined by using a laser diffraction method. Particularly, a powder to be analyzed is dispersed in a dispersion medium and introduced to a commercially available laser diffraction particle size analyzer (e.g. Microtrac S3500), and then a difference in diffraction pattern depending on particle size is determined, when particles pass through laser beams, and then a particle size distribution is calculated. Then, the particle diameter at each point of 10%, 50% and 90% of the accumulated particle number distribution depending on a particle diameter is calculated to determine each of D10, D50 and D90.

According to an embodiment of the present disclosure, the first positive electrode active material contained in the lower layer region of the positive electrode and the second positive electrode active material contained in the upper layer region thereof are different types of lithium oxide of nickel cobalt manganese active materials having a different Ni content, and thus an intermixing region in which such different types of active materials are mixed may be present at the portion where the lower layer region is in contact with the upper layer region. This is because when the slurry for a lower layer containing the first positive electrode active material and the slurry for an upper layer containing the second positive electrode active material are coated at the same time or continuously with a very short time interval and then dried at the same time to form an active material layer, a certain intermixing zone is generated at the interface where the slurry for a lower layer is in contact with the slurry for an upper layer before drying, and then the intermixing zone is formed in the shape of a layer of intermixing region, while the slurry for a lower layer and the slurry for an upper layer are dried subsequently.

According to an embodiment of the present disclosure, the weight ratio (ratio of loading amount per unit area) of the lower layer region to the upper layer region of the positive electrode active material layer may be 20:80-80:20, particularly 30:70-70:30. When the above-defined weight ratio is satisfied, the adhesion between the current collector and the positive electrode active material layer is enhanced, and excellent quick charging performance may be realized.

According to an embodiment of the present disclosure, the thickness ratio of the lower layer region to the upper layer region may be 20:80-80:20, particularly 30:70-70:30. When the above-defined thickness ratio is satisfied, the adhesion between the current collector and the positive electrode active material layer is enhanced, and excellent quick charging performance may be realized.

According to an embodiment of the present disclosure, the total thickness of the positive electrode active material layer is not particularly limited. For example, the positive electrode active material layer may have a total thickness of 40-200 μm. In addition, the lower layer region in the positive electrode active material layer may have a thickness of 20-150 μm, or 30-100 μm, and the upper layer region may have a thickness of 20-150 μm, or 30-100 μm.

When the thickness of the lower layer region and the upper layer region satisfies the above-defined range, the adhesion between the current collector and the positive electrode active material layer is enhanced, and excellent quick charging performance may be realized.

The weight percentage (wt%) of the first binder polymer in the lower layer region may be larger than the weight percentage (wt%) of the second binder polymer in the upper layer region.

Particularly, the ratio (a/b) of the weight percentage (wt%) (a) of the first binder polymer in the solid content of the slurry for a lower layer based on the weight percentage (wt%) (b) of the second binder polymer in the solid content of the slurry for an upper layer may be 1-5, 1.1-5, 1-4, 1.2-4, 1-3, 1.5-3, or 2.1-3.

Herein, when the ratio of the weight percentage (wt%) of the first binder polymer in the lower layer region based on the weight percentage (wt%) of the second binder polymer in the upper layer region satisfies the above-defined range, it is possible to realize excellent adhesion between the current collector and the positive electrode active material layer and

excellent quick charging performance.

According to an embodiment of the present disclosure, the weight percentage (wt%) of the first binder polymer in the lower layer region of the positive electrode active material layer may be 1-3 wt%, 1.5-2.5 wt%, or 1.5-2.4 wt%, and the weight percentage (wt%) of the second binder polymer in the upper layer region of the positive electrode active material layer may be 0.5-3 wt%, 1-2.5 wt%, or 1-2.4 wt%.

According to an embodiment of the present disclosure, the ratio (wt%) of the combined weight of the first binder polymer and the second binder polymer based on the total weight of the positive electrode active material layer may be 1-3 wt%, 1-2 wt%, 2-3 wt%, 1-2.4 wt%, or 2.4-3 wt%.

In another aspect of the present invention, there is provided a method for manufacturing a positive electrode, including the steps of:

preparing a slurry for a lower layer containing a first positive electrode active material represented by the following Chemical Formula 1, a first binder polymer and a first dispersion medium and a slurry for an upper layer containing a second positive electrode active material represented by the following Chemical Formula 2, a second binder polymer and a second dispersion medium, wherein the Ni content of the second positive electrode active material is larger than the Ni content of the first positive electrode active material;
coating the slurry for a lower layer on one surface of a positive electrode current collector, and coating the slurry for an upper layer on the slurry for a lower layer; and
drying the coated slurry for a lower layer and slurry for an upper layer at the same time to form a positive electrode active material layer:

[Chemical Formula 1] $Li_{1+a}[Ni_xMn_yCo_z]M1_tO_2$

wherein $0 \leq a \leq 0.2$, $0.4 \leq x \leq 0.9$, $0 < y < 1$, $0 < z < 1$, $0 \leq t < 0.1$ and $x + y + z + t = 1$, and M1 is at least one element selected from the group consisting of Co, Mn, Ni, Al, Fe, V, Cr, Ti, Ta, Mg, Mo, Zr, W, Sn, Hf, Nd and Gd,

[Chemical Formula 2] $Li_{1+b}[Ni_uMn_vCo_w]M2_sO_2$

wherein $0 \leq b \leq 0.2$, $0.4 \leq u \leq 0.9$, $0 < v < 1$, $0 < w < 1$, $0 \leq s < 0.1$ and $u + v + w + s = 1$, and M2 is at least one element selected from the group consisting of Co, Mn, Ni, Al, Fe, V, Cr, Ti, Ta, Mg, Mo, Zr, W, Sn, Hf, Nd and Gd.

The positive electrode current collector is not particularly limited, as long as it has conductivity, while not causing any chemical change in the corresponding battery. For example, stainless steel, aluminum, nickel, titanium, baked carbon, copper or stainless steel surface-treated with carbon, nickel, titanium, silver, etc., aluminum-cadmium alloy, or the like, may be used. Although the positive electrode current collector is not particularly limited in its thickness, it may have a currently used thickness of 3-500 $\mu$m.

The first positive electrode active material and the second positive electrode active material may be present in an amount of 80-99 wt% based on the total weight of the slurry for a lower layer and the slurry for an upper layer, respectively.

The positive electrode active material layer may further include a conductive material, and thus each of the slurry for a lower layer and the slurry for an upper layer may further include a conductive material.

The conductive material is not particularly limited, as long as it causes no chemical change in the corresponding battery and has conductivity. Particular examples of the conductive material include: a carbon black-based carbonaceous material, such as carbon black, acetylene black, Ketjen black, channel black, furnace black, lamp black or thermal black; conductive fibers, such as carbon fibers or metallic fibers; metal powder, such as fluorocarbon, aluminum or nickel powder; conductive whisker, such as zinc oxide or potassium titanate; conductive metal oxide, such as titanium oxide; conductive materials, such as polyphenylene derivatives, or the like. The conductive material may be added in an amount of 0.1-20 wt% based on the total weight of the positive electrode slurry composition.

Each of the first binder polymer and the second binder polymer is an ingredient that assist the binding of the conductive material, the active material or the positive electrode current collector and may be present in an amount of 0.1-20 wt% based on the total weight of the positive electrode slurry composition. Particular examples of each of the first binder polymer and the second binder polymer independently include polyvinylidene fluoride-co-hexafluoropropylene (PVDF-co-HFP), polyvinylidene fluoride, polyacrylonitrile, polymethyl methacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylic acid, styrene butadiene rubber (SBR), lithium polyacrylate (Li-PAA), or the like.

Each of the first dispersion medium and the second dispersion medium may independently include water or an organic solvent, such as N-methyl-2-pyrrolidone (NMP), and may be used in such an amount that the slurry for an upper layer and the slurry for a lower layer containing the first positive electrode active material/the second positive electrode active material, the first binder polymer/the second binder polymer, the conductive material, or the like may have a desired

level of viscosity.

In addition, the method for coating the slurry for a lower layer and the slurry for an upper layer is not particularly limited, as long as it is used conventionally in the art. For example, a coating process using a slot die may be used, and a Mayer bar coating process, a gravure coating process, a dip coating process, a spray coating process, or the like, may also be used.

According to an embodiment of the present disclosure, when the step of coating the slurry for a lower layer on one surface of the positive electrode current collector and the step of coating the slurry for an upper layer on the slurry for a lower layer are carried out at the same time or with a very short time interval, a device, such as a double slot die, may be used.

The step of drying the coated slurry for a lower layer and the coated slurry for an upper layer at the same time to form an active material layer may include drying the coated slurry for a lower layer and slurry for an upper layer at the same time to remove the dispersion medium in each slurry, carrying out pressing, and carrying out vacuum drying to form an active material layer.

Herein, the pressing may be carried out by using a method, such as roll pressing, used conventionally in the art, for example, under a pressure of 1-20 MPa at a temperature of 15-30°C. In addition, the pressing may be carried out under such a condition that the electrode (active material layer) may have a porosity of 20-40%, 25-35%, 20-30%, or 30-40%, after pressing.

The step of drying the coated slurry may be carried out at 70-110°C, 75-100°C, or 80-90°C, for 10-30 minutes, 15-25 minutes, or 20-30 minutes. The drying temperature and time may be controlled suitably depending on the type and content of the dispersion medium.

In addition, after pressing the dried slurry layer, vacuum drying may be carried out at a temperature of 100-170°C, 120-150°C, or 130-150°C, for about 3-10 hours, or 5-8 hours, but the drying temperature and time may be controlled suitably depending on the type and content of the dispersion medium.

The ratio (a/b) of the weight percentage (wt%) (a) of the first binder polymer in the solid content of the slurry for a lower layer based on the weight percentage (wt%) (b) of the second binder polymer in the solid content of the slurry for an upper layer may be 1-5, 1.1-5, 1-4, 1.2-4, 1-3, 1.5-3, or 2.1-3.

Herein, when the ratio of the weight percentage (wt%) of the first binder polymer in the coated slurry for a lower layer based on the weight percentage (wt%) of the second binder polymer in the coated slurry for an upper layer satisfies the above-defined range, it is possible to realize excellent adhesion and quick charging performance.

The weight percentage (wt%) of the first binder polymer in the solid content of the slurry for a lower layer may be 1-3 wt%, 1.5-2.5 wt%, or 1.5-2.4 wt%, and the weight percentage (wt%) of the second binder polymer in the solid content of the slurry for an upper layer may be 0.5-3 wt%, 1-2.5 wt%, or 1-2.4 wt%.

The ratio (wt%) of the combined weight of the first binder polymer and the second binder polymer based on the total solid content of the slurry for a lower layer and the slurry for an upper layer may be 1-3 wt%, 1-2 wt%, 2-3 wt%, 1-2.4 wt%, or 2.4-3 wt%.

As described above, the positive electrode active material layer has a bilayer structure, and includes a lower layer region facing the positive electrode current collector and containing a first positive electrode active material and a first binder polymer, and an upper layer region facing the lower layer region and containing a second positive electrode active material and a second binder polymer.

In still another aspect of the present disclosure, there is provided a lithium secondary battery including the above-described positive electrode. Particularly, the lithium secondary battery may be obtained by injecting a lithium salt-containing electrolyte to an electrode assembly including the positive electrode, a negative electrode and a separator interposed between both electrodes.

The negative electrode may be obtained by allowing a negative electrode active material to be bound to a negative electrode current collector through a method generally known in the art. Non-limiting examples of the negative electrode active material include conventional negative electrode active materials that may be used for the negative electrodes for conventional electrochemical devices. Particularly, lithium intercalation materials, such as lithium metal or lithium alloys, carbon, petroleum coke, activated carbon, graphite or other carbonaceous materials, are used preferably. Non-limiting examples of the negative electrode current collector include foil made of copper, gold, nickel, copper alloys or a combination thereof.

The negative electrode active material, a conductive material, a binder and a solvent are mixed to prepare a slurry, and then the slurry may be coated directly on the negative electrode current collector. In a variant, the slurry may be cast onto another support, and the negative electrode active material film obtained by peeling it from the support may be laminated on the negative electrode current collector to obtain a negative electrode.

The separator may be a conventional porous polymer film used conventionally as a separator. For example, the porous polymer film may be a porous polymer film made of a polyolefinic polymer, such as ethylene homopolymer, propylene homopolymer, ethylene-butene copolymer, ethylene/hexene copolymer or ethylene/methacrylate copolymer. Such a porous polymer film may be used alone or in the form of a laminate. In addition, an insulating thin film having high ion

permeability and mechanical strength may be used. The separator may include a safety reinforced separator (SRS) including a ceramic material coated on the surface of the separator to a small thickness. In addition, a conventional porous non-woven web, such as a non-woven web made of high-melting point glass fibers or polyethylene terephthalate fibers, may be used, but the scope of the present disclosure is not limited thereto.

The electrolyte includes a lithium salt as an electrolyte salt and an organic solvent for dissolving the lithium salt.

Any lithium salt used conventionally for an electrolyte for a secondary battery may be used without particular limitation. For example, the anion of the lithium salt may be any one selected from the group consisting of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, or two or more of them.

The organic solvent contained in the electrolyte may be any organic solvent used conventionally without particular limitation. Typical examples of the organic solvent include at least one selected from the group consisting of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, and tetrahydrofuran.

Particularly, among the carbonate-based organic solvents, ethylene carbonate and propylene carbonate, which are cyclic carbonates, are organic solvents having high viscosity and a high dielectric constant, and thus may be used preferably, since they can dissociate the lithium salt in the electrolyte with ease. When such a cyclic carbonate is used after mixing it with a linear carbonate having low viscosity and a low dielectric constant, such as dimethyl carbonate or diethyl carbonate, it is possible to prepare an electrolyte having higher electrical conductivity, more preferably.

Optionally, the electrolyte used according to the present disclosure may further include additives contained in the conventional electrolyte, such as an overcharge-preventing agent, or the like.

The lithium secondary battery according to an embodiment of the present disclosure may be obtained by interposing the separator between the positive electrode and the negative electrode to form an electrode assembly, introducing the electrode assembly to a pouch, a cylindrical battery casing or a prismatic battery casing, and then injecting the electrolyte thereto to finish a secondary battery. In a variant, the lithium secondary battery may be obtained by stacking the electrode assemblies, impregnating the stack with the electrolyte, and introducing the resultant product to a battery casing, followed by sealing.

According to an embodiment of the present disclosure, the lithium secondary battery may be a stacked, wound, stacked and folded or cable type battery.

The lithium secondary battery according to the present disclosure may be used for a battery cell used as a power source for a compact device, and may be used preferably as a unit battery for a medium- or large-size battery module including a plurality of battery cells. Particular examples of such medium- or large-size devices include electric vehicles, hybrid electric vehicles, plug-in hybrid electric vehicles, power storage systems, or the like. Particularly, the lithium secondary battery may be useful for batteries for hybrid electric vehicles and new & renewable energy storage batteries, requiring high output.

## MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

#### (1) Manufacture of Positive Electrode

First, Denka black as a conductive material was introduced to N-methyl pyrrolidone (NMP), and the resultant mixture was introduced to a high-speed dispersion system (Spike mill, available from Inoue) and dispersed to prepare a pre-dispersion of conductive material. Next, a positive electrode active material and a binder polymer were mixed with the pre-dispersion of conductive material to prepare a slurry for a lower layer having a viscosity of 10,000 cps.

Herein, the slurry for a lower layer includes 96.3 wt% of a positive electrode active material represented by the chemical formula of $Li[Ni_{0.65}Mn_{0.15}Co_{0.20}]O_2$ and having a Ni content of 65% based on the total transition metals, 1.3 wt% of Denka black as a conductive material and 2.4 wt% of polyvinylidene fluoride (PVDF) as a binder polymer.

In addition, a slurry for an upper layer having a viscosity of 10,000 cps was prepared in the same manner as described above. Herein, the slurry for an upper layer includes 96.3 wt% of a positive electrode active material represented by the chemical formula of $Li[Ni_{0.86}Mn_{0.05}Co_{0.07}]Al_{0.02}O_2$ and having a Ni content of 86% based on the total transition

metals, 1.3 wt% of Denka black as a conductive material and 2.4 wt% of polyvinylidene fluoride (PVDF) as a binder polymer.

The slurry for a lower layer was introduced to the lower layer slurry tank of a dual layer coating instrument, and the slurry for an upper layer was introduced to the upper layer slurry tank thereof to apply the slurry for a lower layer and the slurry for an upper layer onto an aluminum positive electrode current collector having a thickness of 12 μm at the same time.

Then, each slurry was dried at 110°C, and pressing was carried out to obtain a positive electrode having a bilayer-type coating layer. Herein, the positive electrode active material layer of the positive electrode had a total thickness of 175 μm, the lower layer region of the positive electrode active material layer had a thickness of 87 μm, and the upper layer region of the positive electrode active material layer had a thickness of 87 μm. The positive electrode had a porosity of 29%. The weight ratio of the lower layer to the upper layer of the positive electrode active material layer was 50:50.

(2) Manufacture of Negative Electrode

First, 95.6 wt% of a negative electrode active material (artificial graphite), 1.0 wt% of a conductive material (Super-C) and 3.4 wt% of a binder polymer (styrene butadiene rubber) were dispersed in water to prepare a negative electrode active material slurry. The slurry was applied onto a copper negative electrode current collector having a thickness of 8 μm and dried at 150°C, and then pressing was carried out to obtain a negative electrode. Herein, the negative electrode active material layer had a total thickness of 212 μm and a porosity of 29.0%.

(3) Manufacture of Battery

A polyethylene porous film as a separator was interposed between the negative electrode and the positive electrode, the resultant structure was introduced to a battery casing, and then an electrolyte was injected thereto to obtain a secondary battery. Herein, the electrolyte was a mixed solution including ethylene carbonate and ethyl methyl carbonate (volume ratio 3/7) and containing 1.1 M $LiPF_6$ dissolved therein.

Example 2

A positive electrode, a negative electrode and a secondary battery were obtained in the same manner as Example 1, except that the Ni content in the positive electrode active material was changed as shown in the following Table 1.

Comparative Example 1

A positive electrode, a negative electrode and a secondary battery were obtained in the same manner as Example 1, except that 96.3 wt% of a positive electrode active material represented by the chemical formula of $Li[Ni_{0.86}Mn_{0.05}Co_{0.07}]Al_{0.02}O_2$ and having a Ni content of 86% based on the total transition metals, 1.3 wt% of Denka black as a conductive material and 2.4 wt% of polyvinylidene fluoride (PVDF) as a binder polymer were mixed to prepare a slurry for a lower layer having a viscosity of 10,000 cps; and

96.3 wt% of a positive electrode active material represented by the chemical formula of $Li[Ni_{0.65}Mn_{0.15}Co_{0.20}]O_2$ and having a Ni content of 65% based on the total transition metals, 1.3 wt% of Denka black as a conductive material and 2.4 wt% of polyvinylidene fluoride (PVDF) as a binder polymer were mixed to prepare a slurry for an upper layer having a viscosity of 10,000 cps.

Comparative Example 2

First, Denka black as a conductive material was introduced to N-methyl pyrrolidone (NMP), and the resultant mixture was introduced to a high-speed dispersion system (Spike mill, available from Inoue) and dispersed to prepare a pre-dispersion of conductive material. Next, a positive electrode active material and a binder polymer were mixed with the pre-dispersion of conductive material to prepare a slurry having a viscosity of 10,000 cps.

Herein, the slurry includes 96.3 wt% of a positive electrode active material represented by the chemical formula of $Li[Ni_{0.86}Mn_{0.05}Co_{0.07}]Al_{0.02}O_2$ and having a Ni content of 86% based on the total transition metals, 1.3 wt% of Denka black as a conductive material and 2.4 wt% of polyvinylidene fluoride (PVDF) as a binder polymer.

The slurry was applied onto an aluminum positive electrode current collector having a thickness of 12 μm by using a single layer coating system.

Then, the slurry was dried at 110°C, and pressing was carried out to obtain a positive electrode having a monolayer-type coating layer. Herein, the positive electrode active material layer of the positive electrode had a total

thickness of 175 μm.

A lithium secondary battery was obtained in the same manner as Example 1, except that the positive electrode obtained as described above was used.

Each of the positive electrodes and the lithium secondary batteries according to Examples 1 and 2 and Comparative Examples 1 and 2 was evaluated in terms of its characteristics as follows.

Test Example 1: Evaluation of Increase in Resistance in Lower SOC (5-20%) Region as Compared to Resistance at SOC 50%

Each of the lithium secondary batteries according to Examples 1 and 2 and Comparative Examples 1 and 2 was used to evaluate an increase in resistance in a lower SOC (5-20%) region as compared to the resistance at SOC 50% under the following conditions by using the following method. The results are shown in the following Table 1.

The resistance of each lithium secondary battery was determined when it was discharged to each level of SOC at 2.5 C, while the state-of-charge (SOC) was reduced from 100% to 0% at a rate of 5% in an operating voltage range of 2.5-4.25 V at room temperature, and the results are compared.

In addition, the increase in resistance in a lower SOC (5-20%) region as compared to the resistance at SOC 50% was calculated according to the following formula:

Increase in resistance (%) = [(Resistance in lower SOC (5-20%)) / (Resistance at SOC 50%)] X 100,

wherein the resistance in lower SOC (5-20%) is an average value of resistance values determined at SOC 5%, 10%, 15% and 20%.

Test Example 2: Evaluation of High-Temperature Capacity Retention

Each of the lithium secondary batteries according to Examples 1 and 2 and Comparative Examples 1 and 2 was charged/discharged for 170 cycles at 45°C under the following conditions to evaluate the high-temperature capacity retention.

Charge condition: constant current (CC)/constant voltage (CV), (4.25 V, 0.005 C current cut-off)
Discharge condition: constant current (CC) condition, 2.5 V

The high-temperature capacity retention was calculated as a ratio of the discharge capacity after 170 cycles based on the discharge capacity after the first cycle. The results are shown in the following Table 1 and FIG. 1.

[Table 1]

| | Electrode coating type | Ni content in positive electrode active material (mol% based on the total transition metals) | Increase in resistance (%) in lower SOC (5-20%) region as compared to resistance at SOC 50% | High-temperature capacity retention (%) (after 170 cycles) |
|---|---|---|---|---|
| Ex. 1 | Dual layer coating | Ni content in total transition metals of upper layer region positive electrode active material: 86%<br>Ni content in total transition metals of lower layer region positive electrode active material: 65% | 145.3 | 96.2 |
| Ex. 2 | Dual layer coating | Ni content in total transition metals of upper layer region positive electrode active material: 90%<br>Ni content in total transition metals of lower layer region positive electrode active material: 70% | 147.6 | 95.7 |

(continued)

| | Electrode coating type | Ni content in positive electrode active material (mol% based on the total transition metals) | Increase in resistance (%) in lower SOC (5-20%) region as compared to resistance at SOC 50% | High-temperature capacity retention (%) (after 170 cycles) |
|---|---|---|---|---|
| Comp. Ex. 1 | Dual layer coating | Ni content in total transition metals of upper layer region positive electrode active material: 65%<br>Ni content in total transition metals of lower layer region positive electrode active material: 86% | 157.7 | 94.9 |
| Comp. Ex, 2 | Single layer coating | Ni content in total transition metals of positive electrode active material: 86% | 163.0 | 92.3 |

Referring to Table 1, each of the secondary batteries including a bilayer type active material layer controlled to have a Ni content of the second positive electrode active material in the upper layer region larger than the Ni content of the first positive electrode active material in the lower layer region according to Examples 1 and 2 shows a lower increase in resistance in a lower SOC (5-20%) based on the resistance at SOC 50% and a higher high-temperature retention, as compared to the secondary battery using a positive electrode including a bilayer-type active material layer, in which the Ni content of the second positive electrode active material and that of the first positive electrode active material are reversed according to Comparative Example 1, and the secondary battery using a positive electrode including a monolayer-type active material layer according to Comparative Example 2.

**Claims**

**1.** A positive electrode comprising:

a positive electrode current collector; and

a positive electrode active material layer disposed on at least one surface of the positive electrode current collector, and having a lower layer region facing the positive electrode current collector and containing a first positive electrode active material and a first binder polymer, and an upper layer region facing the lower layer region and containing a second positive electrode active material and a second binder polymer,

wherein the first positive electrode active material in the lower layer region is represented by the following Chemical Formula 1, the second positive electrode active material in the upper layer region is represented by the following Chemical Formula 2, and the Ni content of the second positive electrode active material is larger than the Ni content of the first positive electrode active material:

[Chemical Formula 1] $Li_{1+a}[Ni_xMn_yCo_z]M1_tO_2$

wherein $0 \leq a \leq 0.2$, $0.4 \leq x \leq 0.9$, $0 < y < 1$, $0 < z < 1$, $0 \leq t < 0.1$ and $x + y + z + t = 1$, and M1 is at least one element selected from the group consisting of Co, Mn, Ni, Al, Fe, V, Cr, Ti, Ta, Mg, Mo, Zr, W, Sn, Hf, Nd and Gd,

[Chemical Formula 2] $Li_{1+b}[Ni_uMn_vCo_w]M2_sO_2$

wherein $0 \leq b \leq 0.2$, $0.4 \leq u \leq 0.9$, $0 < v < 1$, $0 < w < 1$, $0 \leq s < 0.1$ and $u + v + w + s = 1$, and M2 is at least one element selected from the group consisting of Co, Mn, Ni, Al, Fe, V, Cr, Ti, Ta, Mg, Mo, Zr, W, Sn, Hf, Nd and Gd,

wherein the Ni content of the first positive electrode active material is 50-75 mol% based on the total transition metals of the first positive electrode active material, and the Ni content of the second positive electrode active material is 81-90 mol% based on the total transition metals of the second positive electrode active material.

**2.** The positive electrode according to claim 1, wherein the Ni content of the first positive electrode active material is 65-70 mol% based on the total transition metals of the first positive electrode active material, and the Ni content of the second positive electrode active material is 86-90 mol% based on the total transition metals of the second positive

electrode active material.

**3.** The positive electrode according to claim 1, wherein the weight ratio of the lower layer region of the positive electrode active material layer to the upper layer region thereof is 20:80-80:20.

**4.** A method for manufacturing a positive electrode, comprising the steps of:

preparing a slurry for a lower layer containing a first positive electrode active material represented by the following Chemical Formula 1, a first binder polymer and a first dispersion medium and a slurry for an upper layer containing a second positive electrode active material represented by the following Chemical Formula 2, a second binder polymer and a second dispersion medium, wherein the Ni content of the second positive electrode active material is larger than the Ni content of the first positive electrode active material;
coating the slurry for a lower layer on one surface of a positive electrode current collector, and coating the slurry for an upper layer on the slurry for a lower layer; and
drying the coated slurry for a lower layer and slurry for an upper layer at the same time to form a positive electrode active material layer:

[Chemical Formula 1] $Li_{1+a}[Ni_xMn_yCo_z]M1_tO_2$

wherein $0 \leq a \leq 0.2$, $0.4 \leq x \leq 0.9$, $0 < y < 1$, $0 < z < 1$, $0 \leq t < 0.1$ and $x + y + z + t = 1$, and M1 is at least one element selected from the group consisting of Co, Mn, Ni, Al, Fe, V, Cr, Ti, Ta, Mg, Mo, Zr, W, Sn, Hf, Nd and Gd,

[Chemical Formula 2] $Li_{1+b}[Ni_uMn_vCo_w]M2_sO_2$

wherein $0 \leq b \leq 0.2$, $0.4 \leq u \leq 0.9$, $0 < v < 1$, $0 < w < 1$, $0 \leq s < 0.1$ and $u + v + w + s = 1$, and M2 is at least one element selected from the group consisting of Co, Mn, Ni, Al, Fe, V, Cr, Ti, Ta, Mg, Mo, Zr, W, Sn, Hf, Nd and Gd,
wherein the Ni content of the first positive electrode active material is 50-75 mol% based on the total transition metals of the first positive electrode active material, and the Ni content of the second positive electrode active material is 81-90 mol% based on the total transition metals of the second positive electrode active material.

**5.** The method for manufacturing a positive electrode according to claim 4, wherein the Ni content of the first positive electrode active material is 65-70 mol% based on the total transition metals of the first positive electrode active material, and the Ni content of the second positive electrode active material is 86-90 mol% based on the total transition metals of the second positive electrode active material.

**6.** A lithium secondary battery comprising the positive electrode as defined in any one of claims 1 to 3.

## Patentansprüche

**1.** Positive Elektrode, umfassend:

einen Stromsammler der positiven Elektrode; und
eine Schicht aus aktivem Material der positiven Elektrode, die auf mindestens einer Oberfläche des Stromsammlers der positiven Elektrode angeordnet ist und einen unteren Schichtbereich, der dem Stromsammler der positiven Elektrode zugewandt ist und ein erstes aktives Material der positiven Elektrode und ein erstes Bindemittelpolymer enthält, und einen oberen Schichtbereich aufweist, der dem unteren Schichtbereich zugewandt ist und ein zweites aktives Material der positiven Elektrode und ein zweites Bindemittelpolymer enthält, wobei das erste aktive Material der positiven Elektrode im unteren Schichtbereich durch die folgende chemische Formel 1 dargestellt ist, das zweite aktive Material der positiven Elektrode im oberen Schichtbereich durch die folgende chemische Formel 2 dargestellt ist, und der Ni-Gehalt des zweiten aktiven Materials der positiven Elektrode größer als der Ni-Gehalt des ersten aktiven Materials der positiven Elektrode ist:

[Chemische Formel 1] $Li_{1+a}[Ni_xMn_yCo_z]M1_tO_2$

wobei $0 \leq a \leq 0{,}2$, $0{,}4 \leq x \leq 0{,}9$, $0 < y < 1$, $0 < z < 1$, $0 \leq t < 0{,}1$ und $x + y + z + t = 1$, und M1 mindestens ein Element ist, ausgewählt aus der Gruppe bestehend aus Co, Mn, Ni, Al, Fe, V, Cr, Ti, Ta, Mg, Mo, Zr, W, Sn, Hf, Nd und Gd,

[Chemische Formel 2] $Li_{1+b}[Ni_uMn_vCo_w]M2_sO_2$

wobei $0 \leq b \leq 0{,}2$, $0{,}4 \leq u \leq 0{,}9$, $0 < v < 1$, $0 < w < 1$, $0 \leq s < 0{,}1$ und $u + v + w + s = 1$, und M2 mindestens ein Element ist, ausgewählt aus der Gruppe bestehend aus Co, Mn, Ni, Al, Fe, V, Cr, Ti, Ta, Mg, Mo, Zr, W, Sn, Hf, Nd und Gd, wobei der Ni-Gehalt des ersten aktiven Materials der positiven Elektrode 50-75 Mol-%, bezogen auf die gesamten Übergangsmetalle des ersten aktiven Materials der positiven Elektrode, beträgt, und der Ni-Gehalt des zweiten aktiven Materials der positiven Elektrode 81-90 Mol-%, bezogen auf die gesamten Übergangsmetalle des zweiten aktiven Materials der positiven Elektrode, beträgt.

**2.** Positive Elektrode nach Anspruch 1, wobei der Ni-Gehalt des ersten aktiven Materials der positiven Elektrode 65-70 Mol-%, bezogen auf die gesamten Übergangsmetalle des ersten aktiven Materials der positiven Elektrode, beträgt, und der Ni-Gehalt des zweiten aktiven Materials der positiven Elektrode 86-90 Mol-%, bezogen auf die gesamten Übergangsmetalle des zweiten aktiven Materials der positiven Elektrode, beträgt.

**3.** Positive Elektrode nach Anspruch 1, wobei das Gewichtsverhältnis des unteren Schichtbereichs der Schicht aus aktivem Material der positiven Elektrode zu deren oberem Schichtbereich 20:80-80:20 beträgt.

**4.** Verfahren zur Herstellung einer positiven Elektrode, umfassend die Schritte:

Herstellen einer Paste für eine untere Schicht, die ein erstes aktives Material der positiven Elektrode, dargestellt durch die folgende chemische Formel 1, ein erstes Bindemittelpolymer und ein erstes Dispersionsmedium enthält, und einer Paste für eine obere Schicht, die ein zweites aktives Material der positiven Elektrode, dargestellt durch die folgende chemische Formel 2, ein zweites Bindemittelpolymer und ein zweites Dispersionsmedium enthält, wobei der Ni-Gehalt des zweiten aktiven Materials der positiven Elektrode größer ist als der Ni-Gehalt des ersten aktiven Materials der positiven Elektrode;
Auftragen der Paste für eine untere Schicht auf eine Oberfläche eines Stromsammlers der positiven Elektrode und Auftragen der Paste für eine obere Schicht auf die Paste für eine untere Schicht; und
gleichzeitiges Trocknen der aufgetragenen Paste für eine untere Schicht und der Paste für eine obere Schicht, um eine Schicht aus aktivem Material der positiven Elektrode zu bilden:

[Chemische Formel 1] $Li_{1+a}[Ni_xMn_yCo_z]M1_tO_2$

wobei $0 \leq a \leq 0{,}2$, $0{,}4 \leq x \leq 0{,}9$, $0 < y < 1$, $0 < z < 1$, $0 \leq t < 0{,}1$ und $x + y + z + t = 1$, und M1 mindestens ein Element ist, ausgewählt aus der Gruppe bestehend aus Co, Mn, Ni, Al, Fe, V, Cr, Ti, Ta, Mg, Mo, Zr, W, Sn, Hf, Nd und Gd,

[Chemische Formel 2] $Li_{1+b}[Ni_uMn_vCo_w]M2_sO_2$

wobei $0 \leq b \leq 0{,}2$, $0{,}4 \leq u \leq 0{,}9$, $0 < v < 1$, $0 < w < 1$, $0 \leq s < 0{,}1$ und $u + v + w + s = 1$, und M2 mindestens ein Element ist, ausgewählt aus der Gruppe bestehend aus Co, Mn, Ni, Al, Fe, V, Cr, Ti, Ta, Mg, Mo, Zr, W, Sn, Hf, Nd und Gd, wobei der Ni-Gehalt des ersten aktiven Materials der positiven Elektrode 50-75 Mol-%, bezogen auf die gesamten Übergangsmetalle des ersten aktiven Materials der positiven Elektrode, beträgt, und der Ni-Gehalt des zweiten aktiven Materials der positiven Elektrode 81-90 Mol-%, bezogen auf die gesamten Übergangsmetalle des zweiten aktiven Materials der positiven Elektrode, beträgt.

**5.** Verfahren zur Herstellung einer positiven Elektrode nach Anspruch 4, wobei der Ni-Gehalt des ersten aktiven Materials der positiven Elektrode 65-70 Mol-%, bezogen auf die gesamten Übergangsmetalle des ersten aktiven Materials der positiven Elektrode, beträgt, und der Ni-Gehalt des zweiten aktiven Materials der positiven Elektrode 86-90 Mol-%, bezogen auf die gesamten Übergangsmetalle des zweiten aktiven Materials der positiven Elektrode, beträgt.

**6.** Lithium-Sekundärbatterie, umfassend die positive Elektrode wie in einem der Ansprüche 1 bis 3 definier

## Revendications

**1.** Une électrode positive comprenant :

un collecteur de courant d'électrode positive ; et

une couche de matériau actif d'électrode positive disposée sur au moins une surface du collecteur de courant d'électrode positive, et présentant une région de couche inférieure faisant face au collecteur de courant d'électrode positive et contenant un premier matériau actif d'électrode positive et un premier polymère liant, et une région de couche supérieure faisant face à la région de couche inférieure et contenant un second matériau actif d'électrode positive et un second polymère liant,

dans laquelle le premier matériau actif d'électrode positive dans la région de couche inférieure est représenté par la Formule Chimique 1 suivante, le second matériau actif d'électrode positive dans la région de couche supérieure est représenté par la Formule Chimique 2 suivante, et la teneur en Ni du second matériau actif d'électrode positive est supérieure à la teneur en Ni du premier matériau actif d'électrode positive :

[Formule Chimique 1] $Li_{1+a}[Ni_xMn_yCo_z]M1_tO_2$

dans laquelle $0 \leq a \leq 0,2$, $0,4 \leq x \leq 0,9$, $0 < y < 1$, $0 < z < 1$, $0 \leq t < 0,1$ et $x + y + z + t = 1$, et M1 est au moins un élément choisi dans le groupe constitué par Co, Mn, Ni, Al, Fe, V, Cr, Ti, Ta, Mg, Mo, Zr, W, Sn, Hf, Nd et Gd,

[Formule Chimique 2] $Li_1[Ni_uMn_yCo_w]M2_sO_2$

dans laquelle $0 \leq b \leq 0,2$, $0,4 \leq u \leq 0,9$, $0 < v < 1$, $0 < w < 1$, $0 \leq s < 0,1$ et $u + v + w + s = 1$, et M2 est au moins un élément choisi dans le groupe constitué par Co, Mn, Ni, Al, Fe, V, Cr, Ti, Ta, Mg, Mo, Zr, W, Sn, Hf, Nd et Gd,
dans laquelle la teneur en Ni du premier matériau actif d'électrode positive est de 50-75 % en moles sur la base du total des métaux de transition du premier matériau actif d'électrode positive, et la teneur en Ni du second matériau actif d'électrode positive est de 81-90 % en moles sur la base du total des métaux de transition du second matériau actif d'électrode positive.

**2.** L'électrode positive selon la revendication 1, dans laquelle la teneur en Ni du premier matériau actif d'électrode positive est de 65-70 % en moles sur la base du total des métaux de transition du premier matériau actif d'électrode positive, et la teneur en Ni du second matériau actif d'électrode positive est de 86-90 % en moles sur la base du total des métaux de transition du second matériau actif d'électrode positive.

**3.** L'électrode positive selon la revendication 1, dans laquelle le rapport pondéral de la région de couche inférieure de la couche de matériau actif d'électrode positive à sa région de couche supérieure est de 20:80-80:20.

**4.** Procédé de fabrication d'une électrode positive, comprenant les étapes de :

préparer une suspension pour une couche inférieure contenant un premier matériau actif d'électrode positive représenté par la Formule Chimique 1 suivante, un premier polymère liant et un premier milieu de dispersion et une suspension pour une couche supérieure contenant un second matériau actif d'électrode positive représenté par la Formule Chimique 2 suivante, un second polymère liant et un second milieu de dispersion, dans lequel la teneur en Ni du second matériau actif d'électrode positive est supérieure à la teneur en Ni du premier matériau actif d'électrode positive ;

revêtir la suspension pour une couche inférieure sur une surface d'un collecteur de courant d'électrode positive, et revêtir la suspension pour une couche supérieure sur la suspension pour une couche inférieure ; et

sécher la suspension revêtue pour une couche inférieure et la suspension pour une couche supérieure en même temps pour former une couche de matériau actif d'électrode positive :

[Formule Chimique 1] $Li_{1+a}[Ni_xMn_yCo_z]M1_tO_2$

dans laquelle $0 \leq a \leq 0,2$, $0,4 \leq x \leq 0,9$, $0 < y < 1$, $0 < z < 1$, $0 \leq t < 0,1$ et $x + y + z + t = 1$, et M1 est au moins un élément choisi dans le groupe constitué par Co, Mn, Ni, Al, Fe, V, Cr, Ti, Ta, Mg, Mo, Zr, W, Sn, Hf, Nd et Gd,

[Formule Chimique 2] $Li_{1+b}[Ni_uMn_vCo_w]M2_sO_2$

dans laquelle $0 \leq b \leq 0,2$, $0,4 \leq u \leq 0,9$, $0 < v < 1$, $0 < w < 1$, $0 \leq s < 0,1$ et $u + v + w + s = 1$, et M2 est au moins un élément choisi dans le groupe constitué par Co, Mn, Ni, Al, Fe, V, Cr, Ti, Ta, Mg, Mo, Zr, W, Sn, Hf, Nd et Gd,

dans laquelle la teneur en Ni du premier matériau actif d'électrode positive est de 50-75 % en moles sur la base du total des métaux de transition du premier matériau actif d'électrode positive, et la teneur en Ni du second matériau actif d'électrode positive est de 81-90 % en moles sur la base du total des métaux de transition du second matériau actif

d'électrode positive.

5. Le procédé de fabrication d'une électrode positive selon la revendication 4, dans lequel la teneur en Ni du premier matériau actif d'électrode positive est de 65-70 % en moles sur la base du total des métaux de transition du premier matériau actif d'électrode positive, et la teneur en Ni du second matériau actif d'électrode positive est de 86-90 % en moles sur la base du total des métaux de transition du second matériau actif d'électrode positive.

6. Une batterie secondaire au lithium comprenant l'électrode positive telle que définie dans l'une quelconque des revendications 1 à 3.

FIG. 1

105
100
95
90
85
80
0
50
100
150
200
250
300
Cycle Retention[%]
Cycle
EX. 1
EX. 2
COMP. EX. 1
COMP. EX. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210002853
- CN 110429252 B
- WO 2020242138 A1